# EUROPEAN PATENT SPECIFICATION

(11) **EP 2 919 916 B1**
(45) Date of publication and mention of the grant of the patent: **04.10.2017**
(21) Application number: 13855650.1
(22) Date of filing: 15.11.2013
(51) Int. Cl.: B05B 1/32, B05B 1/30, B65D 83/54, F16K 21/10, A47L 15/00, A47L 17/00

(54) **CONTAINER CLEANER WITH TIMING MECHANISM**
BEHÄLTERREINIGER MIT ZEITSCHALTWERK
NETTOYEUR DE RÉCIPIENT AVEC MÉCANISME À MINUTERIE

(30) Priority: 15.11.2012 US 201261726835 P
(43) Date of publication of application: 23.09.2015
(73) Proprietor: Vita-Mix Management Corporation, Olmsted Township, OH 44138 (US)
(72) Inventor: ARNETT, Michael, Olmsted Township, OH 44138 (US)
(74) Representative: Müller-Boré & Partner Patentanwälte PartG mbB
(86) International application number: PCT/US2013/070346
(87) International publication number: WO 2014/078684

(56) References cited:
- DE-A1- 2 440 707
- FR-A- 1 231 283
- US-A- 4 717 073
- US-A1- 2009 044 865
- US-A1- 2010 212 076
- US-B2- 7 104 474
- US-B2- 7 104 474

## Description

### TECHNICAL FIELD

The present invention relates to a device for cleaning a container, and more particularly, to a device that can emit a high pressure spray to clean the interior of a liquid food container such as a pitcher, blender container, and the like.

### BACKGROUND

Many liquid food containers, such as pitchers, blender containers and the like, are difficult to clean, primarily because of their depth. These types of containers are often in need of frequent cleaning, for example, in commercial environments, such as a restaurant or cocktail lounge, where the blender container may be continually used to blend different drinks.

One possible way to clean these deep containers is to provide a nozzle-like device connected to a water or fluid inlet. Such devices, however, require the close attention of the user who must hold the container with one hand and the nozzle with the other while directing the spray to various locations in the container.

In an alternative design, a low profile platform may be used with an upwardly directed nozzle that is in fluid communication with a water source. A container to be cleaned is inverted, and when its rim engages the platform, a spray is emitted from the nozzle. However, such a device does not assure the complete cleaning of the entire container, particularly for containers that have a greater depth. Moreover, the low profile unit is particularly ineffective for cleaning the bottom of a container, and when the container bottom includes blades, as would be found in a container of a blender, the bottom of the blades are particularly difficult to clean.

As a result, a device has been developed wherein the nozzle is positioned on top of a vertically oriented tower which extends upwardly from a base. The tower can be placed in communication with water under pressure. When the bottom of an inverted container is pressed against the top of the tower, a spray is emitted at that location.
DE 24 40 707 A1 discloses a glass washing device with a push down spindle with a brush on top, with a rinsing tube inside, has a water control valve with a piston inside a chamber controlling water fed through a side entry, so that if the piston is pushed down very rapidly, the water in the lower part of the chamber cannot escape immediately. The piston head has a channel through it blocked by a non-return valve in that direction of flow, so that when pressure in the lower part is excessive, the lip of the valve lifts, and water passes into the upper part of the chamber.

Several problems exist with current designs of this type of device. One such problem is that current container cleaners must be actuated and held down during the cleaning operation. Thus, the operator is not able to perform other tasks during that time, but must tend to the container. Further, the amount of time that the spray head is activated may be variable based on the operator and therefore may be subject to human error.

Thus, the need exists for an improved container cleaning device.

### SUMMARY

A container cleaner is generally provided. The container cleaner includes a base configured to receive inlet fluid. A tube is connected to the base to pass fluid from the base to a nozzle assembly. The nozzle assembly comprises a plunger capable of being depressed relative to a spray head, and a plurality of spray apertures formed in the spray head. The spray apertures are angled to direct fluid to portions of a container placed over the container cleaner. The nozzle assembly further includes a stopper near the connection between the tube and the nozzle assembly. A stem is connected to the plunger and includes a base to form a seal with the stopper between the tube and the nozzle assembly. Depressing the plunger breaks the seal between the base and the stopper and allows fluid to flow from the tube to the spray head.
In an embodiment, the container cleaner comprises a body having a fluid inlet, a spray head movable with respect to the body, and a timing cartridge moveable between an open and closed position. The timing cartridge is configured to open for a predetermined length of time in response to movement of the spray head and fluid is able to pass from the fluid inlet through the body and spray head when the timing cartridge is in the open position.

The container cleaner comprises a travel limiter and may further comprise a starter rod. The distance the spray head is capable of moving may be limited by a travel limiter. The travel limiter may be positioned by rotating the spray head. The spray head is connected to a starter rod that opens the timing cartridge and the timing valve when the spray head is depressed. The opening of the timing valve allows fluid to flow through the fluid inlet and along the flow path to the spray head. Once the fluid enters the spray head it is sprayed out of apertures in the spray head. The opened timing cartridge automatically returns to the closed position after the selected period of time.

In another embodiment, a method for cleaning a container is disclosed. The method comprises positioning a travel limiter of a container cleaner to a desired location for a desired spray time duration. A container is placed over the container cleaner and a spray head is depressed, thereby depressing a starter rod. The starter rod opens a timing valve allowing fluid to flow from a water inlet along a flow path to the spray head. The fluid is then sprayed from the spray head to the container placed over the container cleaner for the selected spray time duration.

### DESCRIPTION OF THE DRAWINGS

Objects and advantages together with the operation of the invention may be better understood by reference to the following detailed description taken in connection with the following illustrations, wherein:
FIG. 1 is an exploded view of a container cleaner;
FIG. 2 is a cross-sectional view of a container cleaner;
FIG. 3 is a cross-sectional view of a nozzle assembly;
FIG. 4 is a cross-sectional view of a nozzle assemble with the plunger depressed;
FIG. 5 is a perspective view of a container cleaner with a sink;
FIG. 6 is a side view of a container cleaner with a sink;
FIG. 7 is a bottom view of a container cleaner with a sink;
FIG. 8 is a cross-sectional view of a container cleaner with a timing cartridge in the closed position;
FIG. 9 is a cross-sectional view of a container cleaner with a timing cartridge in the opened position;
FIG. 10 is a perspective view of a container cleaner with a timing cartridge installed into a sink;
FIG. 11 is a perspective view of a container cleaner with a timing cartridge installed onto a portable base; and
FIG. 12 is a perspective view of a container cleaner with a timing cartridge.

### DETAILED DESCRIPTION

Reference will now be made in detail to exemplary embodiments of the present invention, examples of which are illustrated in the accompanying drawings. It is to be understood that other embodiments may be utilized and structural and functional changes may be made without departing from the respective scope of the invention. Moreover, features of the various embodiments may be combined or altered without departing from the scope of the invention. As such, the following description is presented by way of illustration only and should not limit in any way the various alternatives and modifications that may be made to the illustrated embodiments and still be within the spirit and scope of the invention.

A container cleaning device 10 is generally provided. The components of the container cleaning device 10 may be made of any appropriate material, such as molded of a suitable plastic material such as acrylonitrile butadiene styrene (ABS) or similar material.

The container cleaning device 10 includes a base 12. The base 12 may be any appropriate size and shape, such as generally cylindrical. The base 12 may include an inlet 14 to receive a fluid into the base 12. The inlet 14 may be adapted to engage a fluid transferring device, such as a pipe or a hose.

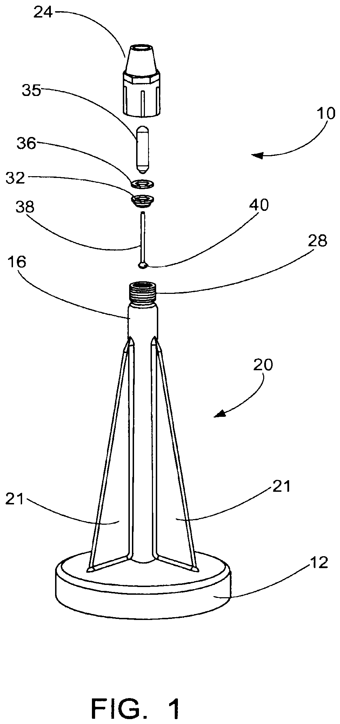

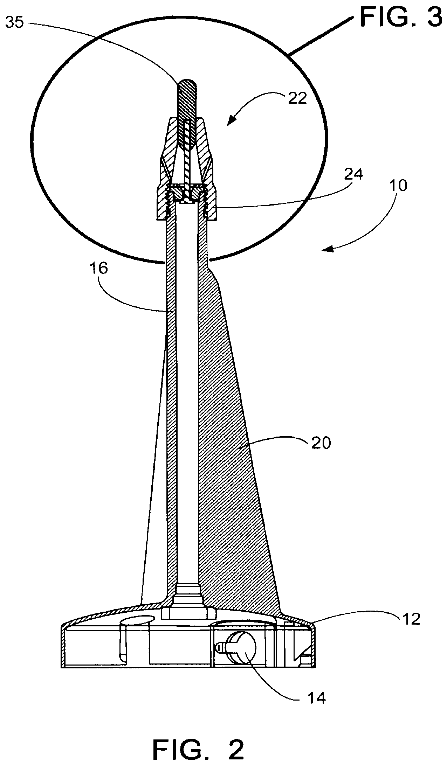

The container cleaner 10 may include a tube 16. The tube 16 may be any appropriate length and shape, such as generally cylindrical. The tube 16 may be connected to the base 12, such as integrally formed with the base 12 or otherwise connected thereto. The tube 16 may be arranged at any appropriate orientation, such as substantially vertical or perpendicular to the base 12 or structure supporting the base 12, as illustrated in FIGS. 1 and 2.

The tube 16 may be in fluid communication with the inlet 14. The base 12 may include tubes, pipes and other appropriate links and connectors between the inlet 14 and the tube 16 to assist in the passage of fluid between the inlet 14 and the tube 16.

The container cleaner 10 may include an outer surface 20. The outer surface 20 may surround the tube 16 to provide support for the tube 16. The surface 20 may be tapered and arranged with its largest portion near the base 12. The surface 20 may further comprise a plurality of tapered fins 21 to provide structural support for the tube 16.

A nozzle assembly 22 may be positioned near the upper portion of the container cleaner 10. The nozzle assembly 22 may be generally configured to receive fluid from the tube 16 and direct a pressurized spray to portions of a container to be cleaned.

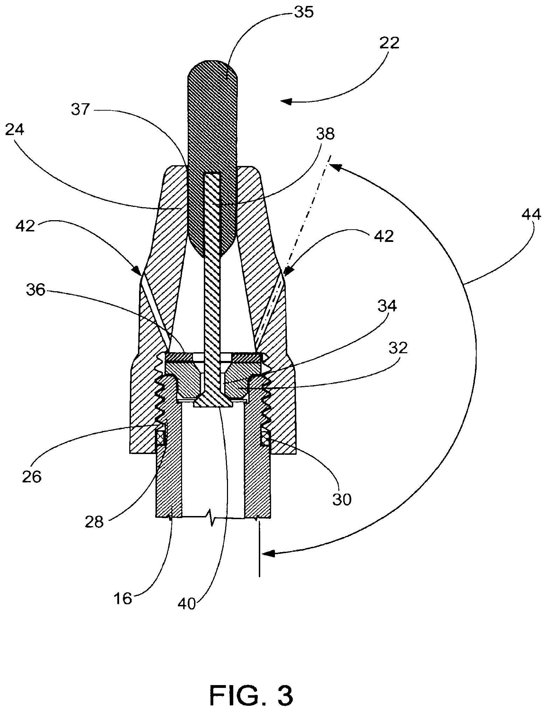

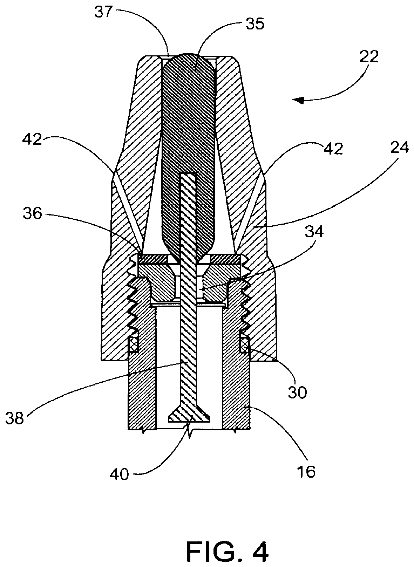

The nozzle assembly 22 may comprise a spray head 24 about its outer surface. The spray head 24 may be shaped similar to an inverted cup and have a generally open interior, as illustrated in FIGS. 3 and 4. The spray head 24 may connect to a portion of the container cleaner 10, such as directly to the tube 16. For example, the spray head 24 may include a threaded portion 26 about its interior configured to engage a similarly threaded portion 28 at the exterior of the tube 16. It will be appreciated, however, that the nozzle assembly 22 may be welded, molded or otherwise connected to the tube 16 by any means known in the art.

A slot 30 may be formed in the outer wall of tube 16 adjacent to the threaded portion 28. The slot 30 may be any appropriate size and shape and configured to receive an o-ring (not shown) therein. The o-ring may provide a fluid seal between tube 16 and nozzle assembly 22.

A stopper 32 is disposed within spray head 24 near the top of the tube 16. The stopper 32 may be any appropriate size and shape, such as generally cylindrical, and may be composed of any appropriate material, such as rubber. In an embodiment, the stopper 32 may have an L-shaped cross-section. A lower portion of the L-shaped stopper 32 may expand within the upper end of the tube 16. The wider, upper portion of the L-shaped stopper 32 may overlap the top edge of the tube 16 and expand within the inner circumference of the spray head 24. The L-shaped seal therefore seals both the internal circumferences of the tube 16 and spray head 24 as well as the boundary between the tube 16 and spray head 24.

The stopper 32 may include an opening 34. The opening 34 may be any appropriate size and shape and may be located at any appropriate position, such as substantially centered along a central axis of the tube 16. The opening 34 may allow fluid from the tube 16 to pass to the nozzle assembly 22. A washer 36 may be positioned above the stopper 32. The opening of the washer 36 may be generally aligned with the seal opening 34.

The nozzle assembly 22 may include a plunger 35. The plunger 35 may be any appropriate size and shape, such as generally cylindrical, and may be composed of any appropriate material, such as plastic or rubber. A portion of the plunger 35 may protrude through an upper opening 37 in the top of the nozzle assembly 22 to expose the plunger 35 above the spray head 24. The plunger 35 may form a seal with the opening 37 to prevent pressurized fluid from exiting via the opening 37. The plunger 35 may be movable within the opening 37, as further described below.

A stem 38 may extend downwardly from a bottom portion of the plunger 35. The stem 38 may be any appropriate size and length. The stem 38 may be integrally formed with the plunger 35 or otherwise connected thereto. The stem 38 may extend through the opening in the washer 36 and the opening 34 in the stopper 32. The stem 38 may have an enlarged base 40 at its distal end. The base 40 may be any appropriate size and shape, such as generally circular. The base 40 may be wider in diameter than the opening 34 to allow the base 40 to completely cover the opening 34 and provide a fluid seal between the tube 16 and the spray head 24. The stem 38 may be tapered toward the enlarged base 40. The tapered shape of the stem 38 may further assist in forming a seal between the base 40 and the opening 34.

In an embodiment, the area of the opening 34 may be less than 0.5 square inches, such as approximately 0.2 square inches. The area of the base 40 may therefore be greater than 0.2 square inches to completely cover the opening 34.

The spray head 24 may include one or more spray apertures 42. For example, the spray head may include four spray apertures 42. The spray apertures 42 may comprise generally tubular openings in the spray head 24. The spray apertures 42 openings may be any appropriate size and shape, such as generally circular.

In an embodiment, the spray apertures 42 may be configured to direct fluid at a desired angle. As illustrated in FIG. 2, the spray aperture 42 may be arranged at an angle 44 with respect to tube 16. The angle 44 may be approximately 160 degrees from the outer wall of the tube 16. It will be appreciated, however, that the spray apertures 42 may be arranged at any appropriate angle 44, such as any angle 44 between 90 degrees and 180 degrees from the outer wall of the tube 16.

In use, pressurized fluid may be fed into the base 12 and through the tube 16. The pressurized fluid near the top of the tube 16 may engage the base 40 of the stem 38 and force the base 40 against the stopper 32 to seal the opening 34. The seal formed at the opening 34 prevents fluid from moving through the tube 16 into the nozzle assembly 22.

The pressurized fluid may provide sufficient force to form a seal between the base 40 and the opening 34. Reducing the area of the base 40 lowers the hydrostatic force required to form a seal at the stopper 32. By reducing the area of the opening 34 to less that 0.5 square inches, the area of the base 40 can also be reduced, thus lowering the required sealing force. As a result, additional components such as springs and other biasing members are not needed to create a seal between the base 40 and the opening 34.

The plunger 35 may be depressed relative to the spray head 24 to allow fluid to pass from the tube 16 into the nozzle assembly 22. For example, a container may be inverted and placed over the container cleaner 10 such that a bottom portion of the container is pressed against the plunger 35. As the plunger 35 is depressed, the base 40 is moved away from the opening 34 to allow pressurized fluid to flow from the tube 16 into the spray head 24. Pressurized fluid may then exit from the spray head 24 via the spray apertures 42 and into the container.

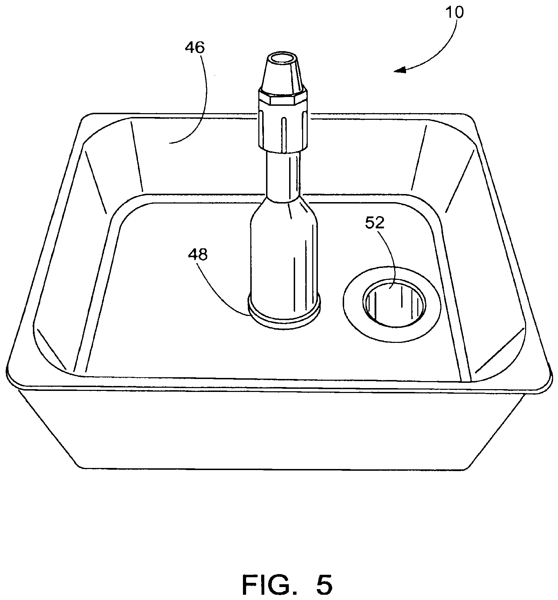

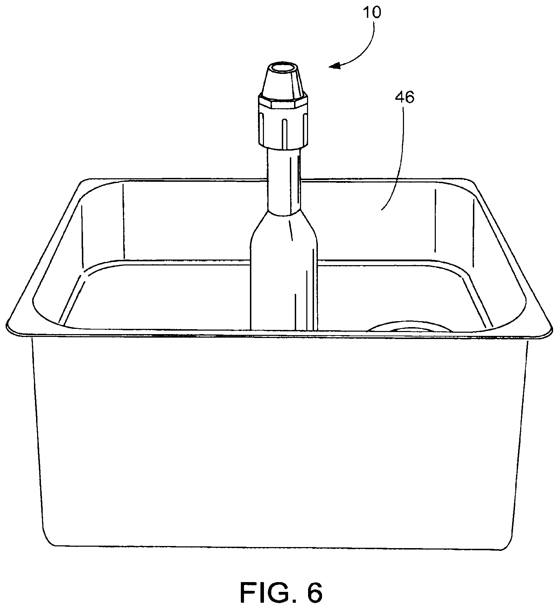

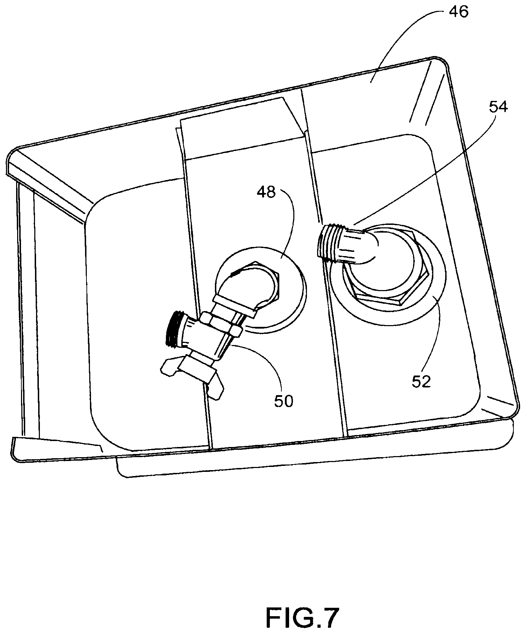

The container cleaner 10 may be mounted within a sink 46, as shown in FIGS. 5-7. The sink 46 may be any appropriate size and shape, such as forming a generally square basin.

The sink 46 may include two or more openings. A first opening may be configured to be an inlet 48. The inlet may include an inlet pipe 50 to receive fluid, such as water. A second opening may be a drain 52. The drain 52 may include a drain pipe 54 to divert drain water to the appropriate path. The base 12 may be mounted at or above the inlet 48 and receive fluid from the inlet 48. The sink 46 may capture excess and drain fluid that is exited from the container cleaner to direct the fluid to the appropriate drain.

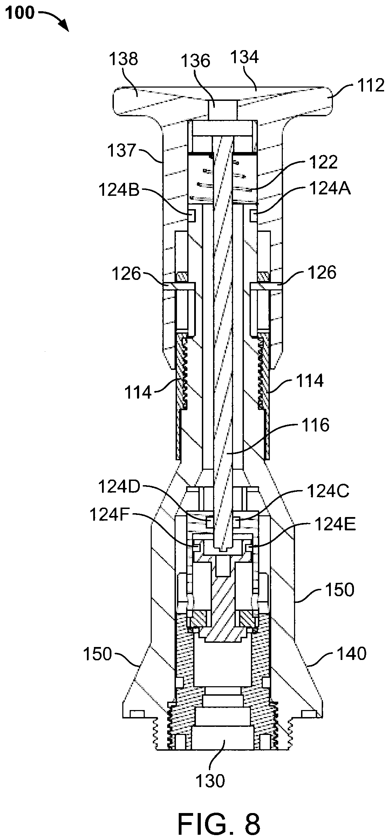

In an embodiment, as shown in FIGS. 8-12 a container cleaner 100 may be configured to provide a spray for a predetermined length of time.

The container cleaner 100 includes a body 150. The body 150 may be any appropriate size and shape, such as generally cylindrical. The body 150 includes a base 140. The base 140 portion of the body 150 may be any appropriate size and shape, and may have portions which extend wider than the other areas of the body to provide support and balance for the container cleaner 100. The body 150 may be installed in a sink, portable base, hose, or any other device that may provide fluid. The body 150 may include a fluid inlet 130 to receive a fluid into the body 150. In an embodiment, the fluid inlet 130 is located in the base 140 of the body 150.The fluid inlet 130 may be adapted to engage a fluid transferring device, such as a pipe or a hose.

The container cleaner 100 includes a spray head 112. The spray head may be any appropriate size and shape, such as generally cylindrical. The spray head 112 may be positioned about the body and movable in relation to the body 150. For example, the spray head 112 may be depressed to be moved closer toward the body 150 and base 140. The top portion 138 of the spray head 112 may extend wider than the lower portion 137 of the spray head 112. The top portion 138 of the spray head may be any appropriate size and shape, such as generally disc-like. The spray head 112 may also include an angled surface 134 centrally located on the top portion 138 of the spray head. The spray head 112 may also comprise an orifice 136 configured to mate with a container. For example, the orifice 136 may receive a portion of a blender container, such as a nut, acorn nut, bolt, or portion of the blending assembly. In an embodiment, the mating of the orifice 136 with a container depresses the spray head 112 and initiates the pressurized spray. The orifice 136 may be generally located near the center of the top portion 138 of the spray head. The spray head may include pins 126 that are positioned below a lower, inner section of the spray head 112.

The container cleaner 100 includes a travel limiter 114. The travel limiter 114 may be any appropriate size and shape, and may be generally located near the perimeter of the body 150. The position of the travel limiter 114 is adjustable and may be adjusted by rotating the spray head 112. The travel limiter 114 may contain grooves or threads to allow the travel limiter to adjust positions when the spray head 112 is rotated.

The container cleaner 100 includes a starter rod 116. The starter rod 116 may be any appropriate size and shape, such as generally cylindrical. The starter rod 116 is generally located inside the body 150 near the center of the body 150. The starter rod 116 extends vertically along the body 150 up into the spray head 112. For example, an upper portion of the starter rod 116 may extend to an interior area of the spray head 112. The spray head may engage the starter rod to drive it in a downward direction when the spray head is depressed. The starter rod 116 may be comprised of any material known in the art such as, but not limited to, stainless steel.

The container cleaner 100 includes a timing cartridge 110. The timing cartridge 110 may be any timing cartridge known in the art such as, but not limited to, the MVP™ Metering Cartridge by Chicago Faucets. However, other timing or metering cartridges made by Chicago Faucets or other manufacturers may be used for the timing cartridge 110. The timing cartridge 110 is generally located near the bottom of the body 150 and extends into the base portion 140 of the body.

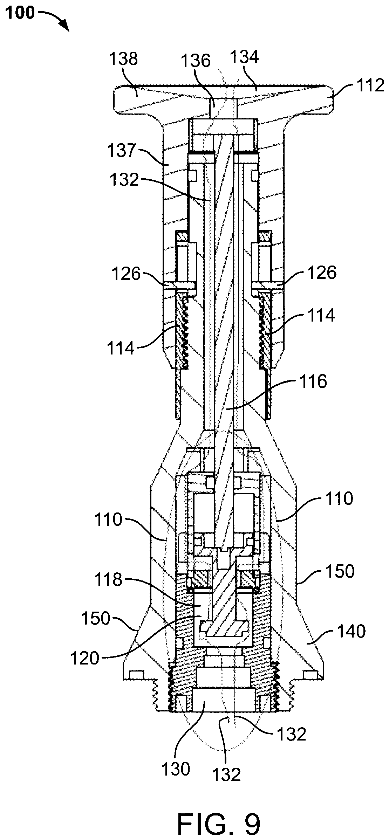

The timing cartridge 110 allows the container cleaner 100 to direct a pressurized spray for a selected timed duration. As shown in FIGS. 8 and 9, the timing cartridge 110 may be located at the distal end of the container cleaner 100. FIG. 8 shows a container cleaner 100 with the timing cartridge 110 in a closed position. FIG. 9 shows container cleaner 100 with the timing cartridge 110 in an opened position. In an embodiment, the timed duration may be adjustable from 0 to 300 seconds. In another embodiment, the timed duration may be adjustable from 0 to 150 seconds. In another embodiment, the timed duration may be adjustable from 0 to 60 seconds.

The time duration of the spray may be adjusted by rotating the head 112 of the container cleaner 100. For example, the container cleaner 100 may include a travel limiter 114. The travel limiter 114 may be positioned to a desired location by rotating the spray head 112, as shown in FIGS. 8 and 9. The travel limiter 114 limits the distance of travel of the spray head 112. For example, the spray head 112 may include pins configured to engage the travel limiter. The travel limiter may be adjusted to a higher position to limit the distance the spray head 112 may be depressed. Likewise, the travel limiter 114 may be adjusted to a lower portion to increase the distance the spray head 112 may be depressed.

The distance the spray head 112 is depressed limits how far the timing cartridge 110 is opened which in turn determines the time duration the pressurized spray remains on. For example, the starter rod 116 may be driven downward when the spray head 112 is depressed. The starter rod may engage a portion of the timing cartridge 110 and drive a movable portion of the timing cartridge down to open a timing valve 118 of the timing cartridge 110. The greater the distance the timing cartridge 110 is opened, the longer the duration the pressurized spray will remain on.

In one embodiment, the container cleaner 100 may comprise o-ring seals 124A, 124B, 124C, 124D, 124E, 124F as shown in FIG. 8. The o-ring seals may be positioned about the interior of the spray head and body and may prevent unwanted fluid leakage.

In an embodiment of the container cleaner 100, the spray head 112 is depressed until the pins 126 make contact with the travel limiter 114 to place the timing cartridge 110 in an open position as shown in FIG. 9. The position of the travel limiter 114 determines the length the spray head 112 may be depressed which determines the how far the timing cartridge 110 may be opened.

Depressing the spray head 112 may open the timing cartridge 110 to allow fluid to flow through the container cleaner 100. For example, the spray head 112 is depressed, as shown in FIG. 9, the attached starter rod 116 moves toward the timing cartridge 110 to open the timing valve 118 of the timing cartridge 110. This allows fluid to flow through the fluid inlet 130 and along the flow path 132 to the spray head 112. Once fluid reaches the spray head 112, the spray head 112 releases a pressurized spray out of its apertures.

Once the timing cartridge 110 has been opened, it may automatically reset itself back into the closed position after a predetermined length of time. The length of time the timing cartridge remains open is dependent upon how far the timing cartridge is depressed and how quickly it rises back to its closed position. As stated above, the length of how far the timing cartridge 110 is depressed is in turn dependent on the location of the travel limiter 114. The timing cartridge 110 may be reset back into its closed position by pressure, springs, or by any other means known in the art. For example, back pressure in the cartridge opening 120, as shown in FIG. 9, may push back on the starter rod 116 which resets the timing cartridge 110. The back pressure may be caused by pressurized air or fluid.

In an embodiment the container cleaner 100 may include a biasing member 122, as shown in FIG. 8. The biasing member 122 may be configured to return the spray head 112 to its closed position. The biasing member 122 may be a spring or any other biasing member known in the art.

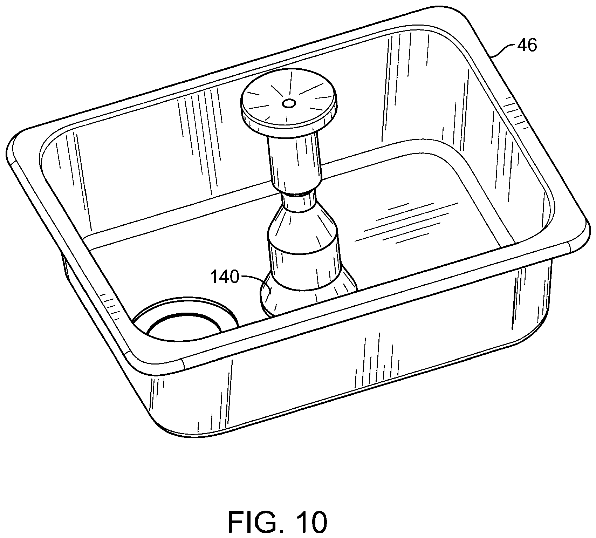

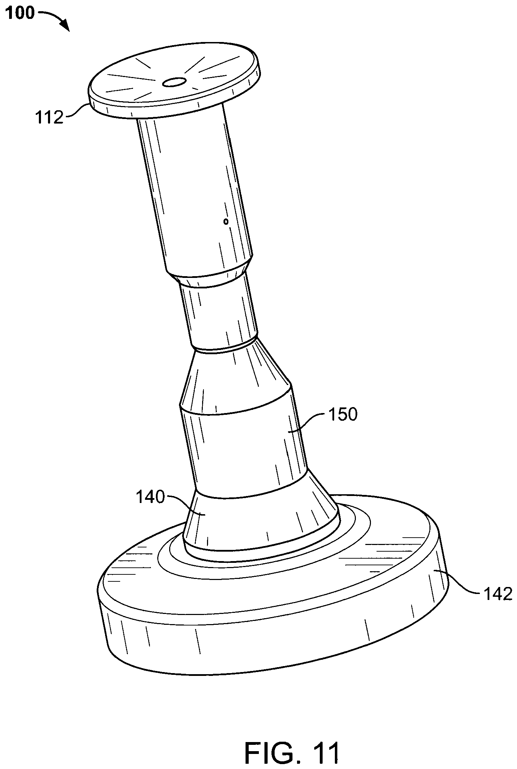

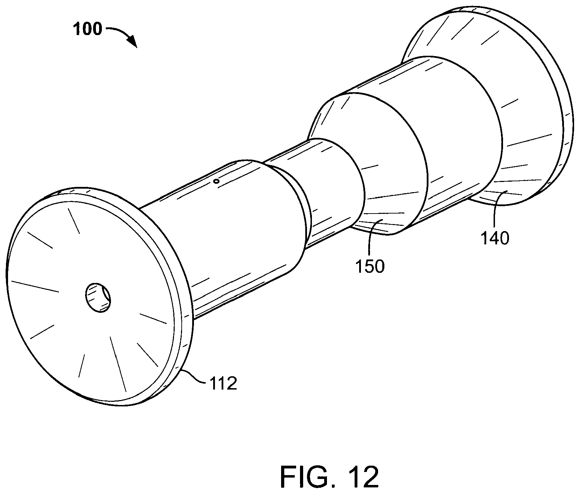

FIGS. 10, 11, and 12 show embodiments of the container cleaner. FIG. 10 shows a non-limiting example of a container cleaner 100 installed into a sink 46 wherein the container cleaner base 140 is installed into an inlet. FIG. 11 shows a non-limiting example of a container cleaner 100 wherein in the container cleaner base 140 is installed into a portable base 142. FIG. 12 shows an embodiment of a container cleaner 100. In an embodiment, when the spray head 112 is rotated to adjust the time duration of the pressurized spray the container cleaner base 140 remains stationary.

## Claims

1. A container cleaner comprising:
a body (150) having a fluid inlet (130);
a spray head (112) movable with respect to the body;
a travel limiter (114) configured to limit a distance of travel of the spray head with respect to the body wherein a position of the travel limiter relative to a non-depressed position of the spray head is adjustable;
a timing cartridge (110) moveable between an open and closed position, wherein the timing cartridge is configured to remain open for a length of time after the applied pressure is removed, wherein the position of the travel limiter determines the length the spray head may be depressed which determines how far the timing cartridge (110) may be opened;
wherein fluid is able to pass from the fluid inlet through the body and spray head when the timing cartridge is in the open position; and **characterised in that** said length of time varies based on the length of movement of the spray head.

2. The container cleaner as described in claim 1 further comprising pins located between the spray head and the travel limiter.

3. The container cleaner as described in claim 1 further comprising a starter rod interconnecting the spray head and the timing cartridge.

4. The container cleaner as described in claim 3 wherein the starter rod comprises stainless steel.

5. The container cleaner as described in claim 1 wherein the spray head comprises one or more apertures.

6. The container cleaner as described in claim 1 further comprising a biasing member (122).

7. The container cleaner as described in claim 1 wherein the timing cartridge (110) automatically resets to a closed position after the timing cartridge is opened for the length of time.

8. The container cleaner as described in claim 7 wherein the timing cartridge is automatically reset by at least one of a spring, pressurized air or pressurized fluid.

9. The container cleaner as described in claim 1 wherein the spray head comprises a surface extending upward from the center of the spray head.

10. The container cleaner as described in claim 1 wherein the spray head comprises an orifice (136) for mating with a container.

11. The container cleaner as described in claim 1 wherein the travel limiter comprises a groove or thread, wherein rotation of the groove or the thread adjusts a position of the travel limiter.

12. The container cleaner as described in claim 5 wherein the one or more apertures are disposed at an angle (44) relative to a vertical axis of the body.

## Patentansprüche

1. Behälterreiniger, der umfasst:
einen Körper (150) mit einem Fluideinlass (130);
einen Sprühkopf (112), der in Bezug auf den Körper beweglich ist;
einen Wegbegrenzer (114), der aufgebaut ist, um eine Wegstrecke des Sprühkopfs in Bezug auf den Körper zu begrenzen, wobei eine Position des Wegbegrenzers relativ zu einer nicht gedrückten Position des Sprühkopfs einstellbar ist;
einen Zeitschaltereinsatz (110), der zwischen einer offenen und einer geschlossenen Position beweglich ist, wobei der Zeitschaltereinsatz aufgebaut ist, um über eine Zeitdauer, nachdem der angewendete Druck entfernt wird, offen zu bleiben, wobei die Position des Wegbegrenzers die Länge bestimmt, die der Sprühkopf gedrückt werden kann, was bestimmt, wie weit der Zeitschaltereinsatz (110) geöffnet werden kann;
wobei Fluid fähig ist, von dem Fluideinlass durch den Körper und den Sprühkopf zu gehen, wenn der Zeitschaltereinsatz in der offenen Position ist; und **dadurch gekennzeichnet, dass** die Zeitdauer basierend auf der Länge der Bewegung des Sprühkopfs variiert.

2. Behälterreiniger nach Anspruch 1, der ferner Stifte umfasst, die zwischen dem Sprühkopf und dem Wegbegrenzer angeordnet sind.

3. Behälterreiniger nach Anspruch 1, der ferner eine Starterstange umfasst, die den Sprühkopf und den Zeitschaltereinsatz miteinander verbindet.

4. Behälterreiniger nach Anspruch 3, wobei die Starterstange nichtrostenden Stahl umfasst.

5. Behälterreiniger nach Anspruch 1, wobei der Sprühkopf eine oder mehrere Öffnungen umfasst.

6. Behälterreiniger nach Anspruch 1, der ferner ein Vorspannelement (122) umfasst.

7. Behälterreiniger nach Anspruch 1, wobei der Zeitschaltereinsatz (110) automatisch in eine geschlossene Position zurücksetzt, nachdem der Zeitschaltereinsatz die vorgegebene Zeitdauer lang geöffnet ist.

8. Behälterreiniger nach Anspruch 7, wobei der Zeitschaltereinsatz durch eine Feder und/oder Druckluft und/oder unter Druck stehendes Fluid automatisch zurückgesetzt wird.

9. Behälterreiniger nach Anspruch 1, wobei der Sprühkopf eine Oberfläche umfasst, die sich von der Mitte des Sprühkopfs nach oben erstreckt.

10. Behälterreiniger nach Anspruch 1, wobei der Sprühkopf eine Mündung (136) zum Anschließen an einen Behälter umfasst.

11. Behälterreiniger nach Anspruch 1, wobei der Wegbegrenzer eine Nut oder ein Gewinde umfasst, wobei die Drehung der Nut oder des Gewindes eine Position des Wegbegrenzers einstellt.

12. Behälterreiniger nach Anspruch 5, wobei die eine oder mehreren Öffnungen in einem Winkel (44) relativ zu einer Vertikalachse des Körpers angeordnet sind.

## Revendications

1. Nettoyeur de récipient comprenant :
un corps (150) ayant une entrée de fluide (130) ;
une tête de pulvérisation (112) mobile par rapport au corps ;
un limiteur de course (114) conçu pour limiter une distance de course de la tête de pulvérisation par rapport au corps, dans lequel une position du limiteur de course par rapport à une position non pressée de la tête de pulvérisation est réglable ;
une cartouche de minuterie (110) mobile entre une position ouverte et fermée, dans lequel la cartouche de minuterie est conçue pour rester ouverte pour une durée après le relâchement de la pression appliquée, dans lequel la position du limiteur de course détermine la longueur que la tête de pulvérisation peut être pressée, laquelle détermine jusqu'à quelle distance la cartouche de minuterie (110) peut être ouverte ;
dans lequel du fluide peut passer de l'entrée de fluide au travers du corps et de la tête de pulvérisation quand la cartouche de minuterie est dans la position ouverte ; et
**caractérisé en ce que** ladite durée varie en fonction de la longueur du mouvement de la tête de pulvérisation.

2. Nettoyeur de récipient tel que décrit dans la revendication 1, comprenant en outre des goupilles situées entre la tête de pulvérisation et le limiteur de course.

3. Nettoyeur de récipient tel que décrit dans la revendication 1, comprenant en outre une tige de démarreur interconnectant la tête de pulvérisation et la cartouche de minuterie.

4. Nettoyeur de récipient tel que décrit dans la revendication 3, dans lequel la tige de démarreur est constituée d'acier inoxydable.

5. Nettoyeur de récipient tel que décrit dans la revendication 1, dans lequel la tête de pulvérisation comprend une ou plusieurs ouvertures.

6. Nettoyeur de récipient tel que décrit dans la revendication 1, comprenant en outre un élément de sollicitation (122).

7. Nettoyeur de récipient tel que décrit dans la revendication 1, dans lequel la cartouche de minuterie (110) se remet automatiquement dans une position fermée après que la cartouche de minuterie a été ouverte pour la durée.

8. Nettoyeur de récipient tel que décrit dans la revendication 7, dans lequel la cartouche de minuterie est automatiquement réinitialisée par au moins un parmi un ressort, de l'air sous pression ou un fluide sous pression.

9. Nettoyeur de récipient tel que décrit dans la revendication 1, dans lequel la tête de pulvérisation comprend une surface qui s'étend vers le haut à partir du centre de la tête de pulvérisation.

10. Nettoyeur de récipient tel que décrit dans la revendication 1, dans lequel la tête de pulvérisation comprend un orifice (136) pour s'accoupler avec un récipient.

11. Nettoyeur de récipient tel que décrit dans la revendication 1, dans lequel le limiteur de course comprend une rainure ou un filetage, dans lequel une rotation de la rainure ou du filetage règle une position du limiteur de course.

12. Nettoyeur de récipient tel que décrit dans la revendication 5, dans lequel les une ou plusieurs ouvertures sont placées à angle (44) par rapport à un axe vertical du corps.
